Europäisches Patentamt

**(19)** European Patent Office

Office européen des brevets

**(11)** Publication number : **0 395 373 B1**

**(12)** # EUROPEAN PATENT SPECIFICATION

**(45)** Date of publication of patent specification :
03.02.93 Bulletin 93/05

**(51)** Int. Cl.⁵ : **B01J 29/06,** C07C 2/12

**(21)** Application number : **90304429.5**

**(22)** Date of filing : **25.04.90**

**(54)** Modification of natural clinoptilolite and its use as an oligomerisation catalyst.

**(30)** Priority : **27.04.89 ZA 893132**

**(43)** Date of publication of application :
**31.10.90 Bulletin 90/44**

**(45)** Publication of the grant of the patent :
**03.02.93 Bulletin 93/05**

**(84)** Designated Contracting States :
**AT BE CH DE ES FR GB GR IT LI LU NL SE**

**(56)** References cited :
EP-A- 0 095 304
EP-A- 0 223 396
FR-A- 1 523 979
US-A- 3 367 884

**(73)** Proprietor : **ZEOFUELS RESEARCH
(PROPRIETARY) LIMITED
Jackson Street, Factoria
Krugersdorp, Transvaal (ZA)**

**(72)** Inventor : **Hutchings, Graham John
17 Northend
Osmotherley, North Yorkshire DL6 7B8 (GB)**
Inventor : **Thermistocleous, Themistoclis
c/o University of Cape Town
Cape Town, Cape (ZA)**
Inventor : **Copperthwaite, Richard George
14 3rd Avenue, Parktown North Johannesburg
Transvaal (ZA)**

**(74)** Representative : **Pearce, Anthony Richmond et
al
MARKS & CLERK Alpha Tower Suffolk Street
Queensway Birmingham B1 1TT (GB)**

EP 0 395 373 B1

Jouve, 18, rue Saint-Denis, 75001 PARIS

EP 0 395 373 B1

## Description

This invention relates to the modification of a natural clinoptilolite, and to the use of the modified clinoptilolite in the oligomerisation of propene to produce hydrocarbon products.

Synthetic zeolite catalysts such as zeolite Y have been used for many years for the process of hydrocarbon cracking. A further advance was made in 1973 when it was discovered that the synthetic zeolite known as ZSM-5 could convert methanol into gasoline range hydrocarbons. It has subsequently been found that the synthetic zeolite ZSM-5 can also be used to convert propene into higher hydrocarbon products in what has become known as the MOGD (Mobil Olefins to Gasoline and Distillate) process. (See Avidan Shredes in Surface Science and Catalysis 36 (1988) 307-323). In this process propene is converted into oligomers containing mainly multiples of three carbon atoms, i.e. $C_6$, $C_9$, $C_{12}$, $C_{15}$, $C_{18}$ products dominate the product distribution. A number of other catalysts are known to be active for propene conversion (e.g. $H_3PO_4/A\ell_2O_3$) but these catalysts do not exhibit the high degree of $C_3$ oligomer product selectively demonstrated by ZSM-5. Hence ZSM-5 has become a preferred catalyst for this reaction. However, ZSM-5 still gives a broad product distribution (e.g. $C_6$, $C_9$, $C_{12}$, $C_{15}$, $C_{18}$) and it would be beneficial for the chemical and petro-chemical industry if a catalyst could be identified that limited the majority of the product selectively to the first and second oligomer products, i.e. the $C_6$ and $C_9$ products for the propene conversion reaction, since these would constitute gasoline range hydrocarbons. Further, ZSM-5 is expensive to produce.

In an article in Applied Catalysis, 16 (1985) 249-253 by Sakoh, Nitta and Aomura, it was disclosed that a natural (i.e. naturally occurring) clinoptilolite from Futatsui, Japan, after modification, can be used in the conversion of methanol to light olefins. The modification of the natural clinoptilolite was carried out following two different procedures. The first procedure involved treating the natural clinoptilolite with 1M HC1 at 80°C for 24 hours after which the sample was filtered off, washed with distilled water and dried in air. The second procedure involved impregnating the clinoptilolite with 0,05M and 0,5M $H_2SO_4$, whereafter the samples were filtered off, dried in air and then calcined at 400°C for 3 hours in air. Thereafter, the catalysts were placed in a fixed bed continuous flow reactor under atmospheric pressure, and methanol vapour was carried through the reactor using helium as a carrier gas. Methanol was converted to hydrocarbons and water at the reaction temperature of 250°C - 400°C over all the modified clinoptilolite catalysts. The hydrocarbons produced contained essentially aliphatic hydrocarbons. Further, this article disclosed the regeneration of these catalysts by recalcination in air.

Subsequently we have disclosed in South African Patent No 88/6733 that modified clinoptilolites can be used as catalysts for hydrocarbon cracking in addition to methanol conversion, and in addition we disclosed a novel method of catalyst regeneration using nitrous oxide.

In a co-pending application we have further disclosed that modification of the clinoptilolite with phosphoric acid is beneficial for the preparation of catalysts for methanol conversion.

To date there have been no disclosures as to the use of modified clinoptilolites as catalysts for the propene oligomerisation reaction.

According to a first aspect of the invention, there is provided a method for the modification of a natural clinoptilolite to produce a modified clinoptilolite, which method includes the steps of:

(a) treating the natural clinoptilolite with a strong alkali at a concentration greater than 0,5M for a treatment time of greater than 1 hour and at a treatment temperature of from 30°C to 80°C.

(b) washing the product of step (a); and

(c) treating the product of step (b) with a strong mineral acid at a concentration of greater than 0,1M for a treatment time of greater than 1 hour and at a treatment temperature of 40°C to 80°C, to produce the modified clinoptilolite.

Preferably, in step (a), the natural clinoptilolite is treated with sodium hydroxide, preferably at a concentration from 0,5M up to and including 5M, more preferably 2M, and for a treatment time of from longer than 1 hour up to and including 48 hours, preferably longer than 24 hours. Preferably in step (c) the strong mineral acid is hydrochloric acid, preferably at a concentration from greater than 0,1M up to and including 2M, and for a treatment time of from longer than 1 hour up to and including 48 hours, preferably longer than 24 hours.

After the above detailed treatment steps, the modified clinoptilolite is preferably calcined at a suitable calcining temperature of from 400°C to 500°C, more preferably 400°C, for a suitable calcining time from 3 hours, e.g. 3 or 4 hours.

The clinoptilolite may be a natural clinoptilolite from Zululand, South Africa, or any other suitable natural clinoptilolite such as that from Fatatsui, Japan.

It is known that natural clinoptilolite from different locations differ in their properties and thus the modified clinoptilolite produced from natural clinoptilolite from Zululand, South Africa, will have somewhat different properties from the modified clinoptilolite produced from natural clinoptilolite from Fatatsui, Japan.

2

According to another aspect of the invention, there is provided a process for the oligomerisation of propene to produce hydrocarbon products using a catalyst, wherein the catalyst is a modified clinoptilolite produced by the method according to said first aspect of the product invention.

This reaction is a well-known reaction and in the present case may be carried out utilising the usual reaction conditions, and the conditions of use of the modified clinoptilolite are substantially the same as the known conditions of use.

Examples of this propene oligomerisation process using a modified catalyst, are also given at the end of this specification.

## Example 1

A sample of unmodified clinoptilolite 50(g) was suspended with stirring in a solution of aqueous sodium hydroxide (2M, 500ml) at 50°C for 8 hours. Following this treatment the sample was collected by filtration and washed with deionised water. The solid was then suspended with stirring in aqueous hydrochloric acid (0,5M, 500ml) at 60°C for 15 hours. Following this treatment the solid was recovered by filtration, washed with deionised water and dried in air at 120°C for 4 hours, and then calcined (400°C, 4h) to give a modified clinoptilolite which we have designated as NC-BA-1. Analysis of NC-BA-1 using X-ray Fluorescence Spectroscopy showed that the modified clinoptilolite had a $SiO_2/A\ell_2O_3$ ratio of 6,9 which compares to the untreated natural clinoptilolite which was found to have a $SiO_2/A\ell_2O_3$ ratio of 6.

The modified clinoptilolite (3,9g) was utilised as a catalyst of the propene oligomerisation reaction in a high pressure microreactor. Propene was reacted over the zeolite at a weight hourly space velocity of ca 3 $h^{-1}$ at temperatures from 250°C up to 350°C and at 50 bar (5 MPa) pressure. Products were collected and analysed by standard gas chromatographic techniques. The results shown in Table 1 demonstrate that the modified zeolite is an effective propene oligomerisation catalyst, and the major product is the trimer, i.e. the $C_9$ product.

## Example 2

This example demonstrates that an alternative modification procedure also produces an effective propene oligomerisation catalyst.

A sample of natural clinoptilolite was modified by treatment with aqueous hydrochloric acid (2M) according to that disclosed in South African Patent Application No 88/6733. The modified clinoptilolite (4g) was loaded to a laboratory atmospheric downflow glass microreactor. Propene was reacted over the zeolite at a weight hourly space velocity (WHSV) of 0,51 $h^{-1}$ at 250°C. Products were collected and analysed by standard gas chromatographic techniques. The results, given in Table 2, demonstrate that the modified zeolite is an effective propene oligomerisation catalyst, and the major product is the dimer, i.e. the $C_6$ product.

Table 1.

Utilisation of NC-BA-1 as a Catalyst for Propene Oligomerisation,
Propene WHSV = $3h^{-1}$, 50 Bar (5 MPa) Pressure

| TOL (h) | 0,5 | 4,0 | 7,0 |
|---|---|---|---|
| Temperature (°C) | 250 | 300 | 350 |
| Propene Conversion (%) | 37,3 | 44,1 | 71,6 |
| Selectivity (% by mass) | | | |
| $C_3$ | 1,8 | 3,1 | 2,9 |
| $C_4$ | 0,4 | 0,6 | 1,2 |
| $C_5$ | 1,5 | 1,6 | 3,7 |
| $C_6$ | 19,1 | 25,8 | 23,8 |
| $C_7$ | 7,1 | 6,9 | 10.0 |
| $C_8$ | 5,4 | 4,4 | 5,3 |
| $C_9$ | 42,8 | 39,9 | 31,4 |
| $C_{12}$ | 17,7 | 13,0 | 14,5 |
| $C_{15}$ | 5,0 | 3,9 | 5,4 |
| $C_{18}$ | - | 0,8 | 1.2 |
| $C_{21}$ | - | 0,02 | 0,07 |

Table 2.

Utilisation of Modified Clinoptilolite Prepared in Example 1 as a
Catalyst for Propene Oligomerisation, Propene WHSV = 0,51 $h^{-1}$,
1 Bar (0,1 MPa) Pressure, Temperature 250°C

| TOL (Min) | 20 | 220 | 460 |
|---|---|---|---|
| Propene Conversion | 34,4 | 14,2 | 11,4 |
| Selectivity (% by mass) | | | |
| $CH_4$ | 0,05 | 0,1 | 0,1 |
| $C_2H_4$ | 0,19 | 0,1 | 0,1 |
| $C_2H_6$ | 0,65 | 1,7 | 2,2 |
| $C_3H_8$ | 0 | 0 | 0 |
| $C_4$ | 6,5 | 3,6 | 2,9 |
| $C_5$ | 6,9 | 4,5 | 3,8 |
| $C_6$ | 65,5 | 71,1 | 73,5 |
| $C_7$ | 7,5 | 3,2 | 2,5 |
| $C_8$ | 5,1 | 2,0 | 1,5 |
| $C_9$ | 7,2 | 13,7 | 13,5 |
| $C_{10}^+$ | 0,5 | 0.02 | 0 |

**Claims**

1. A method for the modification of a natural clinoptilolite to produce a modified clinoptilolite, which method includes the steps of:

5

(a) treating the clinoptilolite with a strong alkali at a concentration greater that 0,5M for a treatment time of greater than 1 hour and at a treatment temperature of from 30°C to 80°C;

(b) washing the product of step (a); and

(c) treating the product of step (b) with a strong mineral acid at a concentration of greater than 0,1M for a treatment time of greater than 1 hour and at a treatment temperature of from 40°C to 80°C, to produce the modified clinoptilolite.

2. A method according to claim 1, wherein in step (a) the strong alkali is sodium hydroxide.

3. A method according to claim 2 wherein in step (a) the sodium hydroxide concentration is from 0,5M up to and including 5M.

4. A method according to claim 2 wherein in step (a) the sodium hydroxide concentration is 2M.

5. A method according to any of claims 1 to 4 wherein in step (a) the treatment time is from longer than 1 hour up to and including 48 hours.

6. A method according to any one of claims 1 to 5 wherein in step (c) the strong mineral acid is hydrochloric acid.

7. A method according to claim 6 wherein the hydrochloric acid concentration is from greater than 0,1M up to and including 2M.

8. A method according to any one of claims 1 to 7 wherein in step (c) the treatment time is from longer than 1 hour up to and including 48 hours.

9. A method according to any one of claims 1 to 8 wherein after step (c) the modified clinoptilolite is calcined.

10. A method according to claim 9, wherein the calcining is carried out at a calcining temperature of from 400°C to 500°C for a calcining time of from 3 hours.

11. A method as claimed in any one of claims 1 to 10 wherein the clinoptilolite is a natural clinoptilolite from Zululand, South Africa.

12. A process for the oligomerisation of propene to produce hydrocarbon products using a catalyst, wherein the catalyst is a modified clinoptilolite produced by a method as claimed in any preceding claim.

**Patentansprüche**

1. Verfahren zur Modifikation eines natürlichen Clinotiloliths zur Herstellung von einem modifizierten Clinoptilolith, wobei das Verfahren die folgenden Stufen umfaßt:

(a) Behandlung des Clinoptiloliths mit einem starken Alkali bei einer Konzentration über 0,5M während einer Behandlungszeit von über einer Stunde und bei einer Behandlungstemperatur von 30°C bis 80°C,

(b) Waschen des Produkts der Stufe (a) und

(c) Behandeln des Produkts der Stufe (b) mit einer starken Mineralsäure bei einer Konzentration von über 0,1M, während einer Behandlungszeit von mehr als einer Stunde und einer Behandlungstemperatur von 40°C bis 80°C, zur Herstellung des modifizierten Clinoptiloliths.

2. Verfahren gemäß Anspruch 1 wobei in der Stufe (a) das starke Alkali Natriumhydroxid ist.

3. Verfahren gemäß Anspruch 2, worin in der Stufe (a) die Natriumhydroxid-Konzentration von 0,5M bis zu und einschließlich 5M ist.

4. Verfahren gemäß Anspruch 2, worin in Stufe (a) die Natriumhydroxid-Konzentration 2M ist.

5. Verfahren gemäß einem der Ansprüche 1 bis 4, worin in Stufe (a) die Behandlungszeit länger als eine Stunde bis zu und einschließlich 48 Stunden ist.

6. Verfahren gemäß einem der Ansprüche 1 bis , worin in Stufe (c) die starke Mineralsäure Salzsäure ist.

**7.** Verfahren gemäß Anspruch 6, worin die Salzsäure Konzentration mehr als 0,1M bis zu und einschließlich 2M ist.

**8.** Verfahren gemäß einem der Ansprüche 1 bis 7, worin in Stufe (c) die Behandlungszeit länger als 1 Stunde bis zu und einschließlich 48 Stunden ist.

**9.** Verfahren gemäß einem der Ansprüche 1 bis 8, worin in Stufe (c) der modifizierte Clinoptilolith calciniert wird.

**10.** Verfahren gemäß Anspruch 9, worin das Calcinieren bei einer Calcinierungstemperatur von 400 bis 500°C während einer Calcinierungszeit von 3 Stunden durchgeführt wird.

**11.** Verfahren gemäß einem der Ansprüche 1 bis 10, worin der Clinoptilolith ein natürlicher Clinoptilolith aus Zululand, Südafrika ist.

**12.** Ein Verfahren zur Oligomerisation von Propen zur Herstellung von Kohlenwasserstoffprodukten unter Verwendung eines Katalysators, wobei der Katalysator ein modifizierter Clinoptilolith ist, welcher nach einem Verfahren gemäß einem der vorstehenden Ansprüche hergestellt ist.


## Revendications

**1.** Procédé pour la modification d'une clinoptilolite naturelle pour produire une clinoptilolite modifiée, ledit procédé comprenant les étapes consistant à :
(a) traiter la clinoptilolite avec un alcali fort, à une concentration supérieure à 0,5M, pendant une période de traitement supérieure à 1 heure, et à une température de traitement de 30°C à 80°C,
(b) laver le produit de l'étape (a) ; et
(c) traiter le produit de l'étape (b) avec un acide minéral fort, à une concentration supérieure à 0,1M, pendant une durée de traitement supérieure à 1 heure, et à une température de traitement de 40°C à 80°C, pour produire la clinoptilolite modifiée.

**2.** Procédé selon la revendication 1, dans lequel, dans l'étape (a), l'alcali fort est de l'hydroxyde de sodium.

**3.** Procédé selon la revendication 2, dans lequel, dans l'étape (a), la concentration de l'hydroxyde de sodium est de 0,5M à 5M, borne incluse.

**4.** Procédé selon la revendication 2, dans lequel, dans l'étape (a), la concentration de l'hydroxyde de sodium est de 2M.

**5.** Procédé selon l'une quelconque des revendications 1 à 4, dans lequel, dans l'étape (a), le temps de traitement va de plus d'une heure jusqu'à 48 heures, inclus.

**6.** Procédé selon l'une quelconque des revendications 1 à 5, dans lequel, dans l'étape (c), l'acide minéral fort est de l'acide chlorhydrique.

**7.** Procédé selon la revendication 6, dans lequel la concentration de l'acide chlorhydrique est comprise entre plus de 0,1M et 2M, borne incluse.

**8.** Procédé selon l'une quelconque des revendications 1 à 7, dans lequel, dans l'étape (c), le temps de traitement va de plus d'une heure jusqu'à 48 heures, inclus.

**9.** Procédé selon l'une quelconque des revendications 1 à 8, dans lequel, après l'étape (c), la clinoptilolite modifiée est calcinée.

**10.** Procédé selon la revendication 9, dans lequel la calcination est réalisée à une température de calcination de 400°C à 500°C, pendant une durée de calcination de 3 heures ou plus.

**11.** Procédé selon l'une quelconque des revendications 1 à 10, dans lequel la clinoptilolite est une clinoptilolite naturelle provenant du Zululand, Afrique du Sud.

12. Procédé d'oligomérisation du propène, pour produire des hydrocarbures, à l'aide d'un catalyseur, dans lequel le catalyseur est une clinoptilolite modifiée, obtenue selon le procédé décrit dans l'une quelconque des revendications précédentes.